Europäisches Patentamt

European Patent Office

Office européen des brevets

(19)

(11) Veröffentlichungsnummer: **0 196 579**
**B1**

(12) **EUROPÄISCHE PATENTSCHRIFT**

(45) Veröffentlichungstag der Patentschrift: **06.02.91**

(51) Int. Cl.⁵: **G 01 V 9/04**

(21) Anmeldenummer: **86103933.7**

(22) Anmeldetag: **22.03.86**

(54) Fotoelektrische Fühlvorrichtung mit Lichtreflexion und/oder Lichtschranke.

(30) Priorität: **29.03.85 DE 3511474**

(43) Veröffentlichungstag der Anmeldung:
**08.10.86 Patentblatt 86/41**

(45) Bekanntmachung des Hinweises auf die
Patenterteilung:
**06.02.91 Patentblatt 91/06**

(84) Benannte Vertragsstaaten:
**FR GB IT**

(56) Entgegenhaltungen:
**DE-C-3 311 578**
**US-A-4 186 309**
**US-A-4 201 910**
**US-A-4 339 660**

**PATENTS ABSTRACTS OF JAPAN, Band 9, Nr.
13 (P-328)1736r, 19. Januar 1985; & JP - A - 59
160 789 (CANON K.K.) 11. September 1984**

(73) Patentinhaber: **Erhardt & Leimer GmbH**
**Leitershofer Strasse 80**
**D-8900 Augsburg 1 (DE)**

(72) Erfinder: **Krauth, Wolfgang**
**Hirschbergstrasse 5**
**D-8904 Friedberg (DE)**

(74) Vertreter: **Sasse, Volker, Dipl.-Ing.**
**Parreutstrasse 27**
**D-8070 Ingolstadt (DE)**

Courier Press, Leamington Spa, England.

**Beschreibung**

Die Erfindung betrifft eine fotoelektrische Fühlvorrichtung der im Gattungsbegriff des Patentanspruchs 1 angegebenen Art.

In der Praxis sind Fühlvorrichtungn zum Abtasten der Warenbahnkante und zum Bestimmen der Kantenposition bekannt, die entweder nach dem Reflexionsprinzip oder nach dem Lichtschrankenprinzip arbeiten. Hierbei sind aber aufwendige Justierarbeiten erforderlich, wenn von einem Prinzip auf das andere Prinzip umgestellt werden soll. Es besteht nämlich das Problem, daß mit dem Reflexionsprinzip nur Warenbahnen gefahren werden können, deren Oberfläche das Licht der Lichtquelle zu reflektieren in der Lage ist. Hat die Warenbahn eine netzartige oder gitterartige Struktur, dann läßt sich das Reflexionsprinzip nur mehr dann anwenden, wenn trotz der Struktur der Warenbahn genügend Licht reflektiert wird. Eine lichtabsorbierende z.B. mattschwarze oder dunkle Warenbahn läßt sich nicht mehr mit dem Reflexionsprinzip abtasten, sondern es ist dann erforderlich, nach dem Lichtschrankenprinzip zu arbeiten, bei dem die Warenbahn den Lichtstrahl der Lichtquelle unterbricht, was der jeweilige Empfängerteil feststellt. Das Lichtschrankenprinzip läßt sich aber dann nicht mehr anwenden, wenn die Warenbahn eine gitterartige oder netzartige Struktur hat, weil mit dem Lichtschrankenprinzip kein eindeutiger Rand mehr abgetastet werden kann. Das Lichtschrankenprinzip arbeitet auch dann nicht zufriedenstellend, wenn der Rand ausgefranst ist. Dann kann, sofern die Warenbahn reflektierend ist, wieder nach dem Reflexionsprinzip gearbeitet werden.

Es ist zum Erfassen von verschieden transparentes Blattmaterial eine Vorrichtung mit einer Reflexlichtschranke gemäß DE—C—3 311 578 bekannt, bei der auf einer Seite der Blattransportbahn eine Lichtquelle und je ein Lchtempfänger für die direkt vom Blattmaterial reflektierte und für die von einer auf der gegenüberliegenden Seite der Blattransportbahn angeordneten Reflexionsfläche reflektierte Strahlung vorgesehen ist. Die Lichtempfänger sind offen nebeneinander angeordnet und insbesondere wenn der Lichtstrahl durch das transparente Material hin- und wieder zurückläuft tritt starkes Streulicht auf, mit dem beide Lichtempfänger zur unrechten Lage bereits bestrahlt werden. Eine exakte Abtastung einer Warenbahnkante läßt sich mit der streulichtempfindlichen Anlage nicht erreichen.

Ferner ist gemäß JP—A—59 160 789 (Patents abstracts of Japan, Bd. 9, Nr. 13) eine Vorrichtung bestehend aus einer Lichtquelle und Photodioden bekannte, die oberhalb und unterhalb der durchzulaufenden Papierseite vorgesehen sind. Weder die Lichtquelle noch die lichtaufnehmenden Elemente sind gegen Um- oder Streulicht besonders geschützt, so daß genaue Messungen nicht möglich erscheinen.

Schließlich ist aus der US—A—4 201 910 eine Lichtschranken-Vorrichtung bekannt, bei der die Lichtquelle zum Empfänger im 90°-Winkel versetzt sitzen, und das Licht auf den Reflektor über einen unter 45° gestellten Spiegel aussendet. Das reflektierte Licht muß dann durch eine zentrale Öffnung im Spiegel auf den Empfängersensor geleitet werden, wozu eine Linse das reflektierte Licht bündelt. Die dabei benutzten Kanäle sind innenwändig sehr aufwendig mit einer nicht reflektierenden Schicht belegt, um Streulicht und Fehlsignale zu vermeiden.

Der Erfindung liegt die Aufgabe zugrunde, eine einfache fotoelektrische Fühlvorrichtung gemäß der eingangs genannten Art dahingehend zu verbessern, daß mit ihr jede Warenbahnart in beliebiger Farbe und Qualität genau erfaßt und deren Lage eindeutig bestimmt werden kann.

Die gestellte Aufgabe wird erfindungsgemäß durch die im kennzeichnenden Teil des Patentanspruchs 1 angegebenen Merkmale gelöst.

Bei dieser Ausbildung wird je nachdem, welche Warenbahn oder Warenbahnqualität zu fahren ist, in jedem Fall eines der beiden Empfängerteile angesprochen, der dann mit der Lichtquelle entweder nach dem Reflexionsprinzip oder dem Lichtschrankenprinzip zusammenarbeitet, denn beide Empfängerteile sind zum Ansprechen bereit. Die vom Empfängerteil weitergeleiteten Impulse sind dann gleich, ob der Lichtstrahl von der Warenbahn reflektiert oder bei der Lichtschranke abgedeckt ist. Entsprechend erfolgt keine Reaktion, wenn keine Reflexion erfolgt oder das Licht bei der Lichtschranke im Empfängerteil ankommt. Es sind dabei die baulichen Voraussetzungen so getroffen, daß keine aufwendigen Justierarbeiten anfallen, sondern daß die Lichtquelle mit den Empfängerteilen stets so zusammenarbeitet, daß der Warenbahnrand genau an derselben Stelle angetastet wird, unabhängig davon, nach welchem Prinzip gerade gearbeitet wird. Handelt es sich um eine lichtabsorbierende Warenbahn mit dichter Oberfläche, so wird der Empfängerteil für das Lichtschrankenprinzip aktiviert. Liegt hingegen eine reflektierende Warenbahn vor, so wird mit dem anderen Empfängerteil nach dem Reflexionsprinzip gearbeitet, wobei das jeweils andere Prinzip trotzdem ständig ansprechbar ist. Diese Schaltung und gleichzeitige Einsatzbereitschaft von beiden Prinzipien hat den großen Vorteil für eine Warenbahn mit netzartiger oder gitterartiger Struktur, bei der das Licht noch reflektiert und auch schon absorbiert wird, so daß hier nach dem Lichtschränken- und dem Reflexionsprinzip gearbeitet wird. Eventuelle Fehlsignale durch auftretendes Streulicht werden durch die besondere Ausrichtung der Lichtquelle zum Empfängerteil, wie es aus Anspruch 1 hervorgeht, eliminiert, insbesondere wenn das Reflexionslicht von der Warenbahnoberfläche zurückgegeben wird. Die gute Zugänglichkeit der Komponenten der Fühlvorrichtung ist dabei vollkommen ausreichend gegeben. Eine gedrängte und kompakte Bauweise läßt sich hierbei ebenfalls erzielen. Es lassen sich im wesentlichen die gleichen äußeren Elemente wie bei einer bisher üblichen Fühlvorrichtung verwenden, so daß eine nachträgliche Umrüstung einer bereits in Betrieb gewesenen Fühlvorrichtung ohne gravierende Maßnahmen möglich ist. Diese Ausführung arbeitet trotz der kurzen Abmessungen sehr präzise, weil nur eindeutig gerichtetes Licht zum Ansprechen dient und sämtliche Fehlreflexionen abgeschirmt bleiben.

In der Praxis hat sich eine Ausführungsform besonders bewährt, wie sie aus Anspruch 2 hervorgeht. Mit diesen Winkelangaben wird eine außerordentlich kompakte Bauweise für die Fühlvorrichtung erreicht, weil die Lichtquelle und die Empfängerteile sehr nahe beieinander stehen. Besonders wichtig ist aber, daß bei diesen Winkeln Streulicht-, ungewollte Reflexionslicht- und Brechungslichteinflüsse von vornherein eliminiert sind. Bei Anwendung des Reflexionsprinzips arbeitet der erste Empfängerteil mit der Lichtquelle sehr präzise zusammen, kein Problem, eine präzise Abtastung des Randbereiches zu erreichen, auch wenn die Lichtquelle mit ihrer Austrittsrichtung in dem angegebenen Winkel liegt.

Eine weitere, wichtige und den Einfluß von Fremdlicht, Streulicht oder Reflexionslicht ausschaltende Ausführungsform geht aus Anspruch 3 hervor. Die Warenbahn gleitet dabei direkt über die Glasfläche und hält die Scheibe staubfrei. Durch die Auflage auf der Glasscheibe befindet sich die Warenbahn präzise im Reflexionsbereich und der Strahlenverlauf erreicht sicher den Empfängerteil. Die gemeinsame Ausnehmung läßt einen kompakten Zusammenbau zu, wobei trotzdem ein leichtes Auswechseln der Einsatzteile gewährleistet ist.

Es hat sich dabei besonders vorteilhaft erwiesen, die Merkmale des Anspruchs 4 zur Anwendung kommen zu lassen, denn die Kanalmündungskante vermeidet trotz des engen Zusammenbaus, daß Streulicht auf direktem Weg von der Lichtquelle zum direkt danebenliegenden Empfänger kommen kann.

Es ist eine Ausführungsform vorteilhaft, wie sie aus Anspruch 5 hervorgeht. Das Unterbringen der Lichtquelle und der Empfänger in einem Gehäuse, selbst wenn dabei winkelige Führungen notwendig sind, bietet den Vorteil eines schnellen Wechsels bei der Reparatur. Ferner muß auch das Gegengehäuse nicht noch einmal verkabelt werden. Schließlich ist nur die Reflexionsfläche äußerlich auf dem Gegengehäuse vorhanden, das eine kostengerechte, einfache Bauausführung zuläßt.

Wichtig sind auch die Maßnahmen von Anspruch 6, da ansonsten die Gefahr besteht, daß in den Kanälen der Ausnehmung noch Reflexionen auftreten, die die Abfühlempfindlichkeit beeinflussen könnten. Dies ist aber auch für die Fläche um die Reflexionsfläche am zweiten Gehäuse gedacht.

Es hat sich außerdem als sehr vorteilhaft herausgestellt, wenn die Vorrichtung mit den Merkmalen das Anspruchs 7 ausgebildet ist. Dabei wird zwar etwas Bauraum verschenkt, allerdings kann dann der Abfühlbereich verhältnismäßig breit ausgelegt werden.

Alternativ dazu ist auch eine Ausführungsform zweckmäßig, wie sie aus Anspruch 8 hervorgeht, wobei bei schmalerem Abfühlbereich eine außerordentlich kompakte Bauweise erzielt wird, da der erste Empfängerteil unmittelbar neben der Lichtquelle liegt, so daß der zweite Empfängerteil sehr nahe an die Lichtquelle herangerückt werden kann.

Anhand der Zeichnungen werden nachstehend Ausführungsformen der Erfindung erläutert.

Es zeigt:

Fig. 1 einen Querschnitt durch eine fotoelektrische Fühlvorrichtung, wobei zwei Ausführungsvarianten angedeutet sind und

Fig. 2 und 3 zwei einander zugeordnete Schnitte durch eine dritte Ausführungsform.

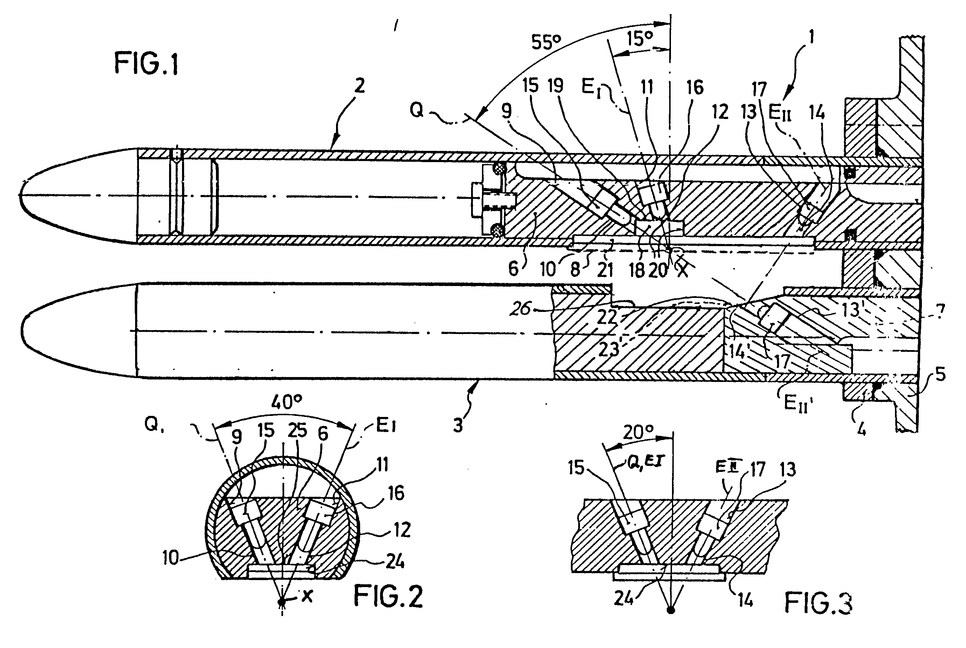

Aus Fig. 1 geht eine fotoelektrische Fühlvorrichtung 1 hervor, die aus einem ersten rohrförmigen Gehäuseteil 2 und einem dazu parallelen und darunterliegenden zweiten rohrförmigen Gehäuseteil 3 besteht, die miteinander durch einen Halteflansch 4 verbunden und an einem Befestigungsteil 5 festgelegt sind, mit dem die Fühlvorrichtung an einer nicht dargestellten Warenbahn-Bearbeitungs-Vorrichtung so anbringbar ist, daß die mit 8 bezeichnete Warenbahn zwischen den beiden Rohrgehäusen 2 und 3 derart läuft, daß ihr Rand abgetastet werden kann.

Im Rohrgehäuse 2 ist ein stabförmiger Haltekörper 6 vorgesehen, auf den das Rohrgehäuse 2 aufgesteckt und durch eine aus der Hauptanmeldung bekannte Haltevorrichtung zur leichten Demontage lösbar festgelegt ist. Dazu ist das Rohrgehäuse 2 quergeteilt. Sein in Fig. 1 linker Teil läßt sich vom Haltekörper 6 abziehen, so daß dann das vordere Ende des Haltekörpers 6 frei zugänglich ist. Im Haltekörper 6 ist eine Fassung 9 vorgesehen, die durch einen zu einer nach unten offenen Ausnehmung 18 verlaufenden Kanal 10 verlängert wird. Unmittelbar benachbart zur Fassung 9 und zum Kanal 10 ist eine Fassung 11 mit einem fluchtenden Kanal 12 vorgesehen, der ebenfalls in die Ausnehmung 18 mündet. In einem Abstand von der Fassung 11 ist ferner eine dritte Fassung 13 vorgesehen, die durch einen Kanal 14 verlängert wird, der an der Unterseite des Haltekörpers 6 mündet. In der Fassung 9 ist eine Lichtquelle, vorzugsweise ein Infrarotlicht 15, so eingesteckt, daß sie mit ihrer mit Q bezeichneten Lichtaustrittsrichtung zu einer auf die Warenbahn senkrechten Ebene unter einem Winkel von annähernd 55° geneigt liegt. In der Fassung 11 ist ein erster Empfängerteil 16, z.B. eine Fotodiode, eingesteckt, die in den Kanal 12 ragt und eine Eintrittsöffnung EI besitzt, die zu der auf die Warenbahnebene senkrechten Ebene unter einem Winkel von 15° geneigt ist, und zwar zur gleichen Seite, wie die Austrittsrichtung Q. In der Fassung 13 ist ein zweiter Empfängerteil 17 eingesteckt, der in den Kanal 14 ragt und eine Eintrittsrichtung E II besitzt, die unter einem Winkel zur auf die Warenbahn senkrechten Ebene, jedoch zur anderen Seite, geneigt ist. Der Kanal 12 bildet mit der Wandung der Ausnehmung 18 eine Mündungskante 19, die den ersten Empfängerteil 16 gegen Reflexionslicht oder Streulicht von der Lichtquelle 15 abschirmt. Zweckmäßigerweise sind die Oberflächen 20 der Ausnehmung 18 und der Kanäle geschwärzt oder lichtabsorbierend ausgebildet. Das Rohrgehäuse 2 besitzt unterseitig eine Ausnehmung, die durch eine Glasscheibe 21 abgedeckt ist. Die Lage der Mündungskante 19 ist so gewählt, daß von der Lichtquelle 15 aus dem Kanal 10 austretendes Licht auch durch Reflexion oder Brechung von der Glasscheibe 21 nicht den ersten Empfängerteil 16 beaufschlagen kann. Die Glasscheibe 21 erstreckt sich auch bis vor die Mündung des Kanals 14 des zweiten Empfängerteils 17. Die Austrittsrichtung Q schneidet sich mit der Eintrittsrichtung E I des ersten Empfängerteils 16 in einem Punkt X, der der Sollage des Randes der Warenbahn 8 entspricht. Die Lichtquelle 15 arbeitet mit dem ersten Empfängerteil 16 nach dem Reflexionsprinzip zusammen, d.h. es wird von der Warenbahn 8 reflektierendes Licht der Lichtquelle vom Empfängerteil 16 festgestellt und einer nicht dargestellten Schaltung gemeldet. Solange von der Warenbahn Licht reflektiert wird, zeigt dies an, daß sich der Rand der Warenbahn in Fig. 1 rechts vom Punkt X befindet. Sobald der Rand nach links über den Punkt X hinaus läuft, wird von der Warenbahn kein Licht mehr reflektiert, was der Empfängerteil 16 feststellt und der Schaltung mitteilt. Dann werden entsprechende Signale entwickelt, mit denen der Warenbahnlauf korrigiert werden kann. Dies erfolgt unter der Voraussetzung, daß die Warenbahn eine reflektierende Oberfläche besitzt. Hat die Warenbahn 8 hingegen eine lichtabsorbierende Oberfläche, so arbeitet die Lichtquelle 15 mit dem zweiten Empfängerteil 17 derart zusammen, daß das in der Austrittsrichtung Q austretende Licht auf eine Spiegelfläche 22 auftrifft, die am zweiten Rohrgehäuse 3 schräg geneigt angeordnet ist. Die Eintrittsrichtung E II des zweiten Empfängerteils 17 ist auf die Spiegelfläche 22 ausgerichtet, so daß wiederum der Punkt X abgetastet wird. Verläuft der Rand der Warenbahn 8 vom Punkt X nach rechts, so wird die Lichtschranke zwischen der Lichtquelle 15 und dem zweiten Empfängerteil 17 unterbrochen, was der Schaltung mitgeteilt wird. Verläuft hingegen der Rand vom Punkt X nach links, so ist die Lichtschranke offen, was ebenfalls zum Erzeugen eines Signals verwendet wird. Die Empfängerteile 16, 17 stehen ständig in Aufnahmebereitschaft, so daß beim Einlegen der Warenbahn nicht überlegt zu werden braucht, welches Abtastsystem für die Ware in Frage kommt.

Bei einer weiteren Ausführungsvariante ist der zweite Empfängerteil 17 nicht im Haltekörper 6 des ersten Rohrgehäuses 2 enthalten, sondern in einem Haltekörper 7, der sich im zweiten Rohrgehäuse 3 befindet und die Fassung 13' mit dem Kanal 14' enthält, wobei in der Fassung 13' und dem Kanal 14' der zweite Empfängerteil 17 unmittelbar auf die Lichtquelle 15 ausgerichtet mit der Eintrittsrichtung E II' angeordnet ist. Der Kanal 14' wird dann durch eine Glasscheibe 23' abgedeckt, die die Spiegelfläche 22 ersetzt.

Bei der Ausführungsform gemäß den Fig. 2 und 3 ist die Lichtquelle 15 und das erste Empfängerteil 16 in Warenbahnlaufrichtung hintereinanderliegend angeordnet. Die Fassung 9 mit dem Kanal 10 ist gegenüber der Fassung 11 mit dem Kanal 12 unter einem Winkel von annähernd 40° schräg gestellt und, wie Fig. 3 zeigt, auch unter einem Winkel von annähernd 20° zu einer auf die Warenbahn senkrechten Ebene in der nach unten offenen Ausnehmung, in die die Kanäle 10 und 12 münden, wird durch den Kanal 12 wieder eine Mündungskante 25 definiert, die Reflexions- oder Brechungslicht von der Glasscheibe vom ersten Empfängerteil 16 fernhält.

Die Austrittsrichtung Q schneidet sich mit der Eintrittsrichtung E I des ersten Empfängerteils 16 in dem Punkt X. Die Lichtquelle 15 arbeitet mit dem ersten Empfängerteil 16 wiederum nach dem Reflexionsprinzip zusammen, d.h. von der reflektierenden Warenbahn wird das Licht aus der Lichtquelle 15 zum Empfängerteil 16 zurückgeworfen. Verläuft der Rand der Warenbahn aus dem Punkt X, so wird kein Licht mehr an den ersten Empfängerteil reflektiert, was dieser der nicht dargestellten Schaltung meldet. Bei dieser Konstruktion kann der zweite Empfängerteil 17 (Fig. 3) nahe an die Lichtquelle 15 und den ersten Empfängerteil 16 herangerückt werden. Der zweite Empfängerteil 17 befindet sich wieder in der Fassung 13 und dem Kanal 14, der zweckmäßigerweise in die gleiche Ausnehmung 24 mündet wie die Kanäle 10 und 12. Der zweite Empfängerteil 17 arbeitet mit der Lichtquelle 15 nach dem Lichtschrankenprinzip zusammen, d.h. daß eine lichtabsorbierende Warenbahn die Lichtübertragung von der Lichtquelle 15 zum Empfängerteil 17 entweder unterbricht oder freigibt, was der Schaltung entsprechend mitgeteilt wird.

Die Empfängerteile 16, 17 sind ständig aktiviert und sie geben ein gleiches Signal weiter, wenn der reflektierende Empfänger 16 Licht erhält und/oder der zweite Empfängerteil 17 kein Licht bekommt und umgekehrt, d.h. wenn die Warenbahn 8 mit ihrem Rand rechts vom Punkt X liegt, erhält der zweite Empfängerteil 17 beim Lichtschrankenprinzip kein Licht und der Strahl wird bei entsprechendem Material auf den ersten Empfängerteil 16 reflektiert. Liegt dagegen die Warenbahn 8 mit ihrem Rand links vom Punkt X, so tritt keine Reflektion auf, und der zweite Empfängerteil 17 erhält den Lichtstrahl. Sowohl die mangelnde Reflektion wie auch der Lichtstrahl der Lichtschranke lassen den gleichen Steuerimpuls entstehen.

Damit eine unzweckmäßige Erwärmung vermieden wird, die bei dem kompakten Aufbau der Fühlvorrichtung kaum zu vermeiden wäre, wenn normale Lichtquellen verwendet werden, ist die Lichtquelle 15 zweckmäßigerweise ein Infrarotlichtquelle.

Die nicht dargestellte Schaltung befindet sich zweckmäßigerweise außerhalb der Fühlvorrichtung und ist über entsprechende Leitungen, die vom Halteteil 5 durch Kanäle in den Haltekörpern 6 und 7 verlaufen, mit der Lichtquelle und den Empfängerteilen verbunden.

Der Vorteil der Fühlvorrichtung besteht darin, daß jegliche Warenbahnqualität angesprochen und sicher abgetastet wird, ohne daß der Benutzer überlegen muß, ob das Lichtschranken- und das Reflexionsprinzip die richtige Steuerung vornimmt und auf das Material anspricht. Es braucht bei der Umstellung von einem Arbeitsprinzip zum anderen Arbeitsprinzip keine Einjustierung vorgenommen werden, da die einzelnen Komponenten der Fühlvorrichtung von vornherein ständig aktiviert und genau aufeinander einjustiert sind, unabhängig davon, nach welchem Arbeitsprinzip sie arbeiten.

## Patentansprüche

1. Fotoelektrische Fühlvorrichtung für bewegtes, flächiges Material, insbesondere ein laufende Textilbahn mit oberhalb und unterhalb der Bewegungsbahn des Materials angeordneten Gehäusen, von denen das erste eine Lichtquelle und einen ersten Empfängerteil für vom Material reflektiertes Licht und einen zweiten Empfängerteil für von einer Reflexionsfläche im zweiten Gehäuse reflektiertes Licht aufweist, wobei die Lichtquelle mit ihrer Austrittsrichtung und zumindest der erste Empfängerteil mit seiner Eintrittsrichtung schräg gegen das Material gerichtet und mit einer lichtdurchlässigen Abdichtung abgedeckt sind, dadurch gekennzeichnet, daß für die Lichtquelle (15) zwei wahlweise aktivierbare Empfängerteile (16, 17) vorgesehen sind, von denen der erste Empfängerteil (16) auf derselben Seite einer im Auftreffbereich des Lichts der Lichtquelle (15) auf dem Material bzw. der Warenbahn (8) senkrecht stehenden Ebene liegt wie die Lichtquelle (15), wobei diese Ebene auch zu einer weiteren Ebene senkrecht ist, in der das Licht von der Lichtquelle (15) über das Material zum ersten Empfängerteil (16) läuft.

2. Fotoelektrische Fühlvorrichtung nach Anspruch 1, dadurch gekennzeichnet, daß die Lichtquelle (15) mit ihrer Austrittsrichtung (O) gegenüber der zur Warenbahn (8) senkrechten Ebene und einem Winkel von annähernd 55° und der erste Empfängerteil (16) mit seiner Eintrittsrichtung ($E_1$) unter einem Winkel von annährend 15°, beide zur gleichen Seite der senkrechten Ebene, geneigt sind.

3. Fotoelektrische Fühlvorrichtung nach Anspruch 1 oder 2, bei der in einem Haltekörper des Gehäuses rohrartige Kanäle für die Lichtquelle und dem Empfängerteil vorgesehen und mit einer Glasscheibe abgedeckt sind, dadurch gekennzeichnet, daß die Kanäle (10, 12) der Lichtquelle (15) und des ersten Empfängerteils (16) in eine gemeinsame und von der Glasscheibe (21) abgedeckter Ausnehmung (18) des Haltekörpers (6) einmünden.

4. Fotoelektrische Fühlvorrichtung nach Anspruch 3, dadurch gekennzeichnet, daß der erste Empfängerteil (16) gegenüber von der Lichtquelle (15) bewirktem Streulicht oder Brechungslicht der Glasscheibe (21) durch eine Kanalmündungskante (19) abgedeckt ist.

5. Fotoelektrische Fühlvorrichtung nach Anspruch 1, dadurch gekennzeichnet, daß die beiden Empfängerteile (16, 17) zusammen mit der Lichtquelle (15) im ersten Rohrgehäuse (2) angeordnet sind, von denen dem nach dem Lichtschrankenprinzip arbeitenden Empfängerteil (17) eine Reflexionsfläche (22) am zweiten Rohrgehäuse (3) zugeordnet ist.

6. Fotoelektrische Fühlvorrichtung nach wenigstens einem der Ansprüche 1 bis 5, dadurch gekennzeichnet, daß die Oberflächen der Kanäle (10, 12, 14, 14'), der Ausnehmung (18, 24) und der dem reflektierenden Empfängerteil gegenüberliegenden Fläche (26) auf dem zweiten Rohrgehäuse (3) geschwärzt oder eine Lichtreflexion unterdrückend beschichtet oder ausgebildet sind.

7. Fotoelektrische Fühlvorrichtung nach einem der vorherigen Ansprüche, dadurch gekennzeichnet, daß die Lichtquelle (15) und die Empfängerteile (16, 17) in Längsrichtung des Haltekörpers (6) im Rohrgehäuse (2) hintereinanderliegen.

8. Fotoelektrische Fühlvorrichtung nach einem der Ansprüche 1 bis 6, dadurch gekennzeichnet, daß die Lichtquelle (15) und der erste Empfängerteil (16) im Haltekörper (6) des ersten Rohrgehäuses (2) in Warenbahnlaufrichtung hintereinander liegen, und daß die Austrittsrichtung (O) der Lichtquelle (15) zur Eintrittsrichtung ($E_1$) des ersten Empfängerteils (16) schräg geneigt, vorzugsweise mit einem Winkel von ca. 40°, liegt.

## Revendications

1. Capteur photoélectrique pour des matières en nappe déplacées, en particulier une bande de textile en mouvement, comprenant des boîtiers disposés au-dessus et au-dessous de la bande en mouvement dont le premier comporte une source lumineuse et un premier élément récepteur pour la lumière réfléchie par la matière et un second élément récepteur pour la lumière réfléchie par une surface de réflexion dans le second boîtier, la source lumineuse avec sa direction de sortie et au moins le premier élément récepteur avec sa direction d'entrée étant orientés en oblique vers la matière et recouverts d'un élément d'étanchéité, caractérisé en ce que pour la source lumineuse (15) sont prévus deux éléments récepteurs (16, 17) pouvant être activés au choix, le premier élément récepteur (16) se trouvant du même côté d'un plan situé dans la zone d'impact de la lumière émise par la source lumineuse (15) et orienté perpendiculairement au matériau et respectivement à la bande de matière (8) que la source lumineuse (15), ledit plan étant également perpendiculaire à un autre plan dans lequel la lumière est envoyée de la source lumineuse (15) au premier élément récepteur (16) en passant par le matériau.

2. Capteur photoélectrique selon la revendication 1, caractérisé en ce que, par rapport au plan perpendiculaire à la bande de matière (8), la direction de sortie (O) de la source lumineuse (15) est inclinée sous un angle d'environ 55° et la direction d'entrée ($E_1$) du premier élément récep-

teur (16) est inclinée sous un angle d'environ 15°, toutes deux étant inclinées vers le même côté dudit plan vertical.

3. Capteur photoélectrique selon l'une des revendications 1 ou 2, dans lequel sont prévus dans un élément de support du boîtier, des canaux tubulaires pour la source lumineuse et l'élément récepteur recouverts par une plaque de verre, caractérisé en ce que les canaux (10, 12) de la source lumineuse (15) et du premier élément récepteur (16) débouchent dans un évidement commun (18) de l'élément de support (6) recouvert par une plaque de verre (21).

4. Capteur photoélectrique selon la revendication 3, caractérisé en ce que le premier élément récepteur (16) est protégé par une arête d'ouverture de canal (19) contre la lumière diffusée issue de la source lumineuse (15) ou réfractée par la plaque de verre (21).

5. Capteur photoélectrique selon la revendication 1, caractérisé en ce que les deux éléments récepteurs (16, 17) sont disposés, conjointement avec la source lumineuse (15), dans le premier boîtier tubulaire (2), à l'élément récepteur (17) fonctionnant d'après le principe de la barrière photoélectrique étant associée une surface de réflexion (22) sur le second boîtier tubulaire (3).

6. Capteur photoélectrique selon l'une des revendications 1 à 5, caractérisé en ce que les surfaces des canaux (10, 12, 14, 14'), de l'évidement (18, 24) et de la surface (26) opposée à l'élément récepteur par réflexion et située sur le second boîtier tubulaire (3) sont noircies ou munies d'un revêtement ou conformées de manière à supprimer une réflexion de la lumière.

7. Capteur photoélectrique selon l'une des revendications précédentes, caractérisé en ce que la source lumineuse (15) et les éléments récepteurs (16, 17) sont disposés les uns derrière les autres dans le boîtier tubulaire (2) dans le sens longitudinal de l'élément de support (6).

8. Capteur photoélectrique selon l'une des revendications 1 à 6, caractérisé en ce que la source lumineuse (15) et le premier élément récepteur (16) se situent, dans la direction de déplacement de la bande de matière, l'un derrière l'autre dans l'élément de support (6) du premier boîtier tubulaire (2), et que la direction de sortie (Q) de la source lumineuse 15) est inclinée vers la direction d'entrée (E$_1$) du premier élément récepteur (16), de préférence sous un angle d'environ 40°.

**Claims**

1. Photoelectric sensing device for moving, sheet-like material, in particular a running textile web having housings arranged above and below the path of movement of the material, of which housings the first has a light source and a first receiver part for light reflected by the material and a second receiver part for light reflected by a reflecting surface in the second housing, the light source being directed with its exit direction and at least the first receiver part being directed with its entrance direction obliquely towards the material and covered by a transparent seal, characterized in that two optionally activatable receiver parts (16, 17) are provided for the light source (15), of which the first receiver part (16) lies on the same side as the light source (15) of a plane perpendicular to the material or the product web (8) in the impingement area of the light of the light source (15), this plane also being perpendicular to a further plane, in which the light from the light source (15) passes over the material to the first receiver part (16).

2. Photoelectric sensing device according to Claim 1, characterized in that the light source (15) is inclined with its exit direction (Q) in relation to the plane perpendicular to the product web (8) at an angle of approximately 55° and the first receiver part (16) is inclined with its entrance direction (E$_1$) at an angle of approximately 15°, both on the same side of the perpendicular plane.

3. Photoelectric sensing device according to Claim 1 or 2, in which tube-like channels for the light source and the receiver part are provided in a holder of the housing and are covered with a glass plate, characterized in that the channels (10, 12) of the light source (15) and of the first receiver part (16) open out into a common recess (18) of the holder (6), covered by the glass plate (21).

4. Photoelectric sensing device according to Claim 3, characterized in that the first receiver part (16) is covered by a channel mouth edge (19) from scattered light or refracted light of the glass plate (21) caused by the light source (15).

5. Photoelectric sensing device according to Claim 1, characterized in that the two receiver parts (16, 17) are arranged together with the light source (15) in the first tube housing (2), of which the receiver part (17) operating on the light-barrier principle is assigned a reflecting surface (22) on the second tube housing (3).

6. Photoelectric sensing device according to at least one of Claims 1 to 5, characterized in that the surfaces of the channels (10, 12, 14, 14'), of the recess (18, 24) and of the face (26) on the second tube housing (3) opposite the reflecting receiver part are blackened or coated or designed so as to suppress light reflection.

7. Photoelectric sensing device according to one of the preceding claims, characterized in that the light source (15) and the receiver parts (16, 17) lie one behind the other in the longitudinal direction of the holder (6) in the tube housing (2).

8. Photoelectric sensing device according to one of Claims 1 to 6, characterized in that the light source (15) and the first receiver part (16) lie one behind the other in the product web running direction in the holder (6) of the first tube housing (2), and in that the exit direction (Q) of the light source (15) lies inclined obliquely with respect to the entrance direction (E$_1$) of the first receiver part (16), preferably at an angle of about 40°.

FIG.1

FIG.2

FIG.3

EP 0 196 579 B1